# EUROPEAN PATENT APPLICATION

(11) **EP 1 148 465 A1**
(43) Date of publication of application: **24.10.2001**
(21) Application number: 00410039.2
(22) Date of filing: 17.04.2000
(51) Int. Cl.: G09G 3/20, G06F 1/16, G06F 3/147

(54) **Modular flat panel display unit**

(71) Applicant: Hewlett-Packard Company, A Delaware Corporation, Palo Alto, CA 94304 (US)
(72) Inventor: Hamon, Olivier, Cidex 124 C, 38920 Crolles (FR)
(74) Representative: Lloyd, Richard Graham

(57) **Abstract**

Modular digital display apparatus is described having a panel enclosure within which is mounted a display panel, the panel enclosure being provided with a panel connector for receiving panel write signals, the apparatus comprising an interface module having a housing that is mechanically mateable with the first enclosure to form a unit and provided with an input connector for receiving via a flying lead an input display signal defining an image to be displayed and a connector for direct electrical connection to the panel connector. The interface module including processing circuitry for receiving the input display signal and processing it into panel write signals for displaying the image on the display panel.

## Description

### Field of the Invention

The invention relates to display devices and, more particularly, to a modular flat panel display unit.

### Background of the Invention

With improvements in display technology, flat panel display devices have become more commonplace for desktop computers in office environments and are also finding greater application to televisions and video monitors.

Typically, such devices comprise a cabinet which is generally similar to those used for CRT monitors, although of course with a much shallower profile. Within the cabinet is contained the LCD display panel itself, its associated backlight and inverter board and an interface board of some kind. Often, the unit will be powered from an external AC/DC adapter.

The role of the interface board is to convert analog or digital signals received at signal input connector - such as a standard VGA analog output from a personal computer for instance - into a form that can be used to drive the LCD panel. Usually provided on the interface board is the complex electronics required for high speed analog to digital and frame rate conversion together with a device known as a scaler.

The scaler is required because the LCD panel is pixelated, ie it comprises a fixed number of display pixels in fixed positions. The input display signal itself however may be organised in a display frame with a different number of pixels. It may therefore be required to convert the resolution of the input signal for use with the resolution of the LCD display panel itself. Also usually provided is functionality for power management of the device and for on-screen display features that allow display for instance of visible scales for brightness and contrast adjustments. An example of the type of electronics usually provided on the interface board can be found described in US-A-5953074.

The problem with this conventional configuration is that the complexity of this high speed signal processing functionality adds significantly to the cost of the display device. However, many of the functions provided are not required by all users. For instance, many users may find it perfectly adequate to have a display device that only operates at a single resolution, that of the display panel, and therefore would not require the scaler.

Similarly, digital-only video interfaces are becoming increasingly proposed and used and therefore the analog to digital and frame rate conversion may no longer be needed in all applications whilst on the other hand, it may be necessary to provide a digital interface of some kind to receive the input signals. Other users may find it useful to have an analog video input for receiving signal directly from a VCR for instance, rather than or in addition to a VGA input, or a wireless input in accordance with evolving wireless connection standards.

To address similar problems, a variety of modular display devices have been proposed. For instance, DE-29705122 U1 proposes a flat screen monitor having a universal mounting and additional modules. In the device proposed, a basic LCD module can be connected directly to the output of appropriate graphics cards and is supplied with power via these cards. An optional analog to digital converter is contained in a positioning foot, which also contains a power supply for the basic LCD module device.

US-A-4969046 describes a modular television apparatus including a video display module, a tuner module and a power supply module that are releasably combineable in a variety of combinations.

An « in PC « LCD video controller card designed for installation with a PC is available from Sage Inc. Such a card includes a graphics accelerator as well as providing digital signal and power supply outputs for driving LCD panels.

Whilst such devices, if implemented as described, would be no doubt generally satisfactory in their operation, it is considered that they do not address all of the problems that arise when developing a modular flat panel display unit that is manufacturable at low cost and that meets the complex set of regulatory and other requirements placed upon a commercially available device.

This invention is directed to providing a modular flat panel display architecture that provides both flexibility in the functionality that can be provided and in the components that can be used.

### Summary of the Invention

In brief, this is achieved by a modular digital display apparatus having a panel enclosure within which is mounted a display panel, the panel enclosure being provided with a panel connector for receiving panel write signals, the apparatus comprising an interface module having a housing that is mechanically mateable with the first enclosure to form a unit and provided with an input connector for receiving via a flying lead an input display signal defining an image to be displayed and a connector for direct electrical connection to the panel connector, the interface module including processing circuitry for receiving the input display signal and processing it into panel write signals for displaying the image on the display panel.

The panel enclosure can be arranged to present an identifier that can be read by the processing circuitry so as to enable parameters of the display device to be retrieved and used in the processing of the display signal. In one embodiment, the panel enclosure comprises a register that is readable via the panel connector, the identifier being in the form of a value stored in the register although many other forms of mechanical and electrical identifiers would be possible.

This enables the need for the manufacturer to source different types of display panel components to be accomodated within the modular architecture. Usually, the manufacturer of the display will buy the display panels from another supplier and the detailed designs may vary as between different suppliers. Even if the manufacturer of the display also manufactures the display panel component then the design and qualification of the display panel may evolve over time and there may be a need to somehow isolate changes in the details of the panel from changes in the design of modular electronic functional blocks.

The processing circuitry can for instance comprise on screen display circuitry and in this case, the interface module advantageously includes a surface provided with one or more externally accessible switches linked to the on screen display circuitry for enabling a user to adjust display parameters.

To enable the device to be used with conventional personal computer systems, the input connector is a VGA connector, the processing circuitry in this case including an analog to digital converter.

### Brief Description of the Invention

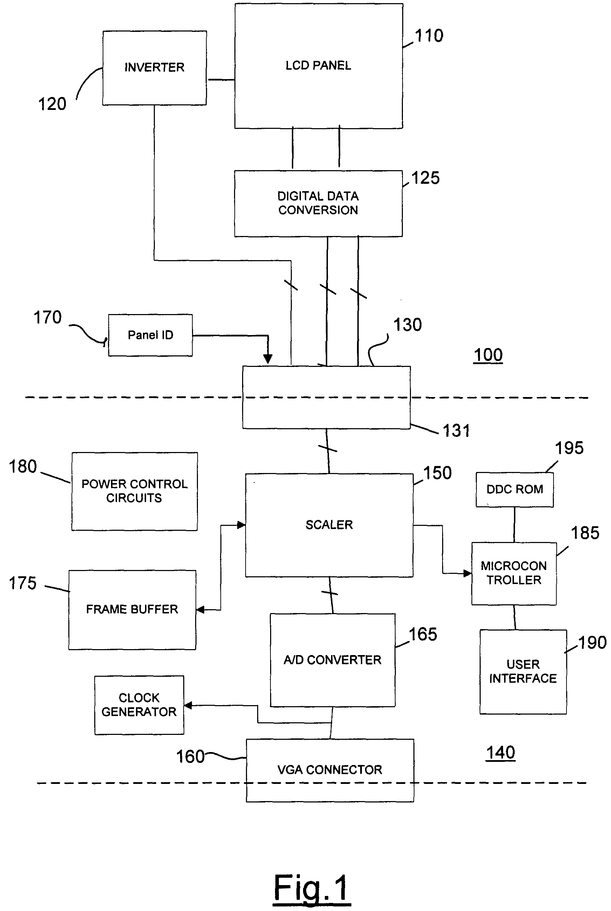

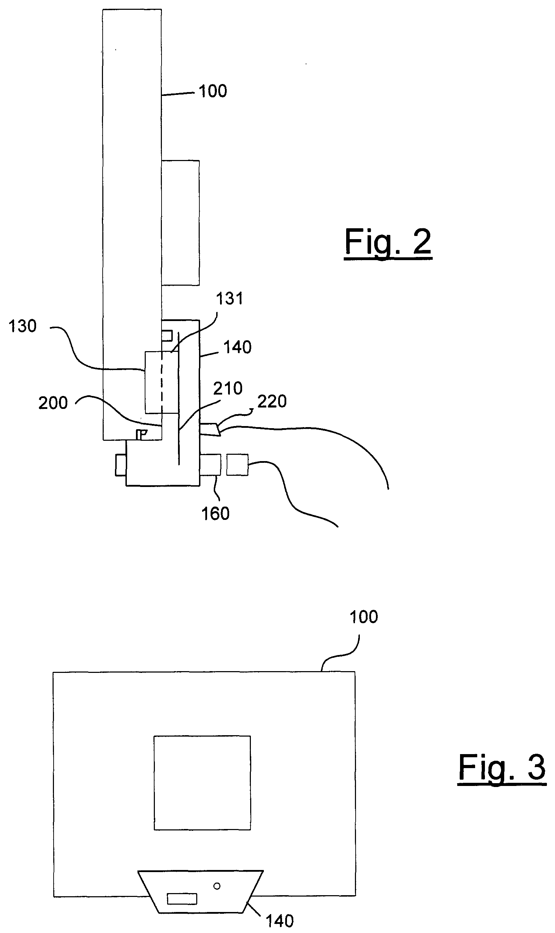

A flat panel display unit embodying the invention will now be described, by way of non-limiting example, with reference to the accompanying drawings, in which
. **Figure 1** is a schematic block diagram showing the main functional components of a flat panel display unit;
. **Figure 2** is sectional view showing the mechanical configuration of the unit;
. **Figure 3** is a rear view of the unit.

### Best Mode of Carrying out the Invention

Fig 1 is a schematic diagram showing the main functional components of a modular flat panel display unit in accordance with the invention. In Fig 1 the broken lines denote the boundaries of the different mechanical enclosures.

The device comprises a first set of components that are located within a panel enclosure 100. Panel enclosure 100 is of a shallow rectangular shape and includes the display panel itself 110 with its associated backlight and inverter 120. A RFI-free connector 130 is provided to the rear of panel enclosure 100 for receiving the panel write signals that control the display of images on the panel. Digital data conversion circuit 125 is provided for converting input TTL signals into the LVDS signals used by the panel.

A mechanically separate interface module 140 contains various video signal processing components including scaler circuit 150 for changing the pixel resolution of a digitally encoded image, a VGA interface 160 including a standard VGA input connector for receiving an input signal via a flying lead from a computer system unit and analog to digital conversion and frame rate conversion circuitry denoted at 165. The interface module 140 is provided with a connector 131 corresponding to connector 130 and allowing interaction between the components mounted within panel enclosure 100 and those mounted within the interface module 140. A RAM 175 for storing a frame buffer is provided that is used by scaler 150 for temporarily storing the image displayed on the screen to enable Frame Rate Conversion.

Within the functionality provided in interface module part 140 is a microcontroller 185 which includes firmware that serves to manage the functions of the monitor, such as video timing, communication with scaler 150, and the generation of menus and other visible indications on the display screen, in particular in response to the modification of various parameters of the screen such as brightness, contrast etc - a function generally referred to as on screen display (OSD). The user can adjust display parameters through OSD using buttons that are presented to the exterior of the interface module, denoted as user interface 190.

Interface module 140 also includes a DDC ROM 195 which stores standardized Extended Display Identification Data information and makes it available to a host computer via VGA interface in accordance with the well known Display Data Channel standards.

In this embodiment, power control circuits 180, which include suitable DC-DC converters are located with the interface module part 140. Power for the display panel itself is passed to panel enclosure 100 via connector 130.

The general operation of these components is well known in the art and will not be described in any more detail here.

The purpose of dividing the electronic functionality between panel enclosure 100 and the interface module 140 to introduce modularity to the design. This This modularity can be implemented at the manufacturing or at the end user level.. The electronic components that are mounted in panel enclosure 100 are those that are associated specifically with the operation of the display panel itself and so will always be required whatever the application of the unit. The components present in interface module 140 are those that are optional in the sense that not all customers will require them or they may be subject to variation according to the geographical market for which the unit is intended, technological trends or changes in applicable technical standards.

Since unit 140 is separately manufactured from unit 100, the configuration allows great flexibility in the manufacturing arrangements possible. Indeed, interface module 140 may be manufactured in a different place and in different quantities from panel unit 100, and possibly even by different manufacturers.

It is possible, but not essential that the interface module 140 be interchangeable at the point of use, although this is not excluded.
Depending on the manufacturing and supply chain strategy adopted, The connectors 130 and 131 can be selected to support different design and cost constraints..

Fig 2 shows in a sectional view one example of the physical configuration of the unit in an exemplary embodiment. Fig 3 is a rear view of the unit. As can be seen in Fig 2 the panel enclosure 100 and the interface module 140 are mechanically mateable to form a single unit. In particular in the design shown in Fig 2, interface module 140 includes a surface 200 upon which is provided connector 131. Surface 200 engages the rear surface of the panel enclosure 100 so that connectors 130 and 131 are completely enclosed in the assembled unit.

This intimate mechanical and electrical mating of the two parts has advantages in limiting RFI radiation from the device, which would be greatly increased if the two enclosures were to be separated and linked for instance by a cable. The RFI seal can be improved by the use of a suitable gasket disposed between module 140 and enclosure 100.

In this embodiment, a circuit board 210 supporting the components of interface module 140 is mounted vertically within the module 140 and connector 131 is directly mounted on the circuit board. As can be seen in Fig 2, the interface module is stepped in order to allow the buttons to be presented at the front surface of the display unit.

The unit is designed to be powered using an external AC/DC power supply adapter of known type, the interface module part 140 including a connector for connection to the adapter.

The panel enclosure 100 also comprises a register 170 that presents a simple identifier n the form of a value stored in the register that can be read by the circuitry in the interface module in order to enable the type of flat panel to be known and the microcontroller on the interface module to be properly configured.

This addresses the need for the manufacturer of the unit to accommodate different types of display panel components within a modular architecture. Usually, the manufacturer of the display will buy the display panels from another supplier and the detailed designs may vary as between different suppliers. Even if the manufacturer of the display also manufactures the display panel component then the design of the display panel may evolve over time and there may be a need to isolate changes in the details of the panel from changes in the design of modular electronic functional blocks. The identifier stored in register 170 provides a means for the microcontroller within interface module part 140 to discover which type of panel is present in the panel enclosure and to adapt their parameters accordingly.

Although a specific embodiment of the invention has been described that employs one possible configuration of the interface module 140, the invention is not to be limited to the specific arrangement so described and it will be appreciated that many other configurations are possible. For instance, interface module 140 could include any number of analog or digital inputs with their respective connectors. Additional functionality could also be added to interface module 140 for instance an amplifier could be integrated into the module and connections provided for speakers and/or microphone and a camera if required, the interface module could configured as a USB hub to allow connections to keyboard and/mouse device and control of the monitor itself via a USB connection. If the display panel incorporates a touch screnn, then associated touch screen controller could be incorporated into the module.

The invention is limited therefore only by the claims. The claims themselves are intended to indicate the periphery of the claimed invention and are intended to be interpreted as broadly as the language itself allows, rather than being interpreted as claiming only the exemplary embodiment disclosed by the specification.

## Claims

1. Modular digital display apparatus having a panel enclosure within which is mounted a display panel, the panel enclosure being provided with a panel connector for receiving panel write signals, the apparatus comprising an interface module having a housing that is mechanically mateable with the first enclosure to form a unit and provided with an input connector for receiving via a flying lead an input display signal defining an image to be displayed and a connector for direct electrical connection to the panel connector, the interface module including processing circuitry for receiving the input display signal and processing it into panel write signals for displaying the image on the display panel.

2. A display apparatus as claimed in claim 1 wherein the panel enclosure is arranged to present an identifier that can be read by the processing circuitry so as to enable parameters of the display panel to be retrieved and used in the processing of the display signal.

3. Modular display apparatus as claimed in claim 1 wherein the processing circuitry comprises a scaler for changing the pixel resolution of the image.

4. Modular display apparatus as claimed in claim 1 wherein the processing circuitry includes on screen display circuitry.

5. Modular display apparatus as claimed in claim 3 wherein the interface module housing includes a surface provided with one or more externally accessible switches linked to the on screen display circuitry for enabling a user to adjust display parameters.

6. Modular display apparatus as claimed in claim 1 wherein the input connector is a VGA connector, the processing circuitry including an analog to digital converter.

7. Modular display apparatus as claimed in claim 1 wherein the panel enclosure comprises a register that is readable via the panel connector, the identifier being in the form of a value stored in the register.

8. Modular display apparatus as claimed in claim 1 comprising an external AC/DC power supply adapter, the interface module including a connector for connection to the power supply module and a DC-DC converter and being arranged to supply power to the panel via the panel connector.

9. Modular display apparatus as claimed in claim 1 wherein the panel enclosure comprises an inverter and a backlight.
